# EUROPÄISCHE PATENTSCHRIFT

(11) **EP 0 881 420 B1**
(45) Veröffentlichungstag und Bekanntmachung des Hinweises auf die Patenterteilung: **16.08.2000**
(21) Anmeldenummer: 98104975.2
(22) Anmeldetag: 19.03.1998
(51) Int. Cl.: F16L 23/06

(54) **Rohrkupplung**
Pipe coupling
Raccord de tuyaux

(30) Priorität: 31.05.1997 DE 19722969
(43) Veröffentlichungstag der Anmeldung: 02.12.1998
(73) Patentinhaber: Weinhold, Karl Dipl.-Ing. (FH), D-41464 Neuss (DE)
(72) Erfinder: Weinhold, Karl Dipl.-Ing. (FH), D-41464 Neuss (DE)
(74) Vertreter: Cohausz & Florack

(56) Entgegenhaltungen:
- DE-A- 2 263 397
- US-A- 3 866 956
- US-A- 4 573 717

## Beschreibung

Die Erfindung betrifft eine Rohrkupplung, bestehend aus zwei Schellenhälften mit C-förmigem Querschnitt, die an ihrem einen Ende um mindestens einen Bolzen gegeneinander schwenkbar verbunden sind und aus einem an den diametral gegenüberliegenden anderen Enden der Schellenhälften angebrachten Schnellverschluß, der einen Schraubenbolzen umfaßt, dessen eines Ende an einer der Schellenhälften angelenkt ist und auf dessen anderes Ende eine die Schellenhälften in die Schließstellung ziehende Schraubenmutter aufgesetzt ist, wobei an der Schraubenmutter ein in der Schließstellung arretierbarer Hebel angelenkt ist.

Rohrkupplungen mit den vorgenannten gattungsgemäßen Merkmalen sind bekannt, DE-OS 22 63 397. Die Rohrschellen umgreifen die Rohrflanschverbindung formschlüssig. Sie sind mittengeteilt und bestehen aus zwei gleich geformten Hälften, die an ihrem einen Ende mittels Bolzen gelenkig miteinander verbunden sind und am diametral gegenüberliegenden Ende durch Spannmittel in die Schließstellung gezogen werden.

Der Erfindung liegt nun die Aufgabe zugrunde, die Schellenhälften mittels eines geeigneten Verschlusses ohne Vorjustierung schnell unter beliebige Spannung zu setzen, zu schließen und den Verschluß dann gegen unbeabsichtigtes Betätigen, insbesondere gegen ungewolltes Öffnen, zu sichern.

Zur Lösung dieser Aufgabe wird bei der gattungsgemäßen Rohrkupplung erfindungsgemäß vorgeschlagen, daß die Schraubenmutter an einem über den Schraubenbolzen geschobenen Gleitstück anliegt, das mit gegenüberliegenden Achsbolzen in entsprechend geformten Vertiefungen in der einen Schellenhälfte ruht, und daß der Hebel mittels einer an der anderen Schellenhälfte angelenkten Bügelfeder in der Schließstellung arretiert ist.

Durch die erfindungsgemäße Ausbildung der Rohrkupplung wird die gestellte Aufgabe gelöst. Mittels des an der Schraubenmutter angelenkten Hebels kann die Schraubenmutter schnell in die bzw. aus der Schließstellung gedreht werden. Nach dem Erreichen der Schließstellung wird der Hebel umgelegt und an einer Schellenhälfte durch geeignete Mittel, vorzugsweise eine Bügelfeder oder einen Splint, festgelegt. Auf diese Weise wird der Hebel vor unbeabsichtigter Betätigung mit der Folge eines Öffnens der Rohrkupplung zur Unzeit gesichert.

Gemäß einer bevorzugten Ausgestaltung der erfindungsgemäßen Rohrkupplung soll der Hebel in der Schließstellung in einer auf der anderen Schellenhälfte gebildeten Vertiefung ruhend, arretiert sein.

Die Bügelfeder soll vorzugsweise an demselben Lagerbolzen angelenkt sein wie der Schraubenbolzen.

In der Zeichnung ist ein Ausführungsbeispiel der erfindungsgemäßen Rohrkupplung in mehreren Abbildungen dargestellt. Es zeigen
- Fig. 1: die Rohrkupplung in Seitenansicht,
- Fig. 2: einen Querschnitt,
- Fig. 3: einen Schnitt längs der Linie A - B aus Fig. 1,
- Fig. 4: einen Schnitt längs der Linie C - D aus Fig. 1,
- Fig. 5: die Ansicht "X" und
- Fig. 6: die Ansicht "Y".

Gleiche Teile sind in den verschiedenen Abbildungen mit denselben Bezugszeichen versehen. Die miteiander zu verbindenden benachbarten Rohrstücke 1, 2 weisen Flansche 3 auf, zwischen die ein Dichtring 4 gelegt ist. Die Flansche 3 werden von zwei im wesentlichen gleich geformten Hälften 5, 6 einer Rohrschelle umfaßt und durch Schließen der Rohrschelle lösbar miteinander verbunden.

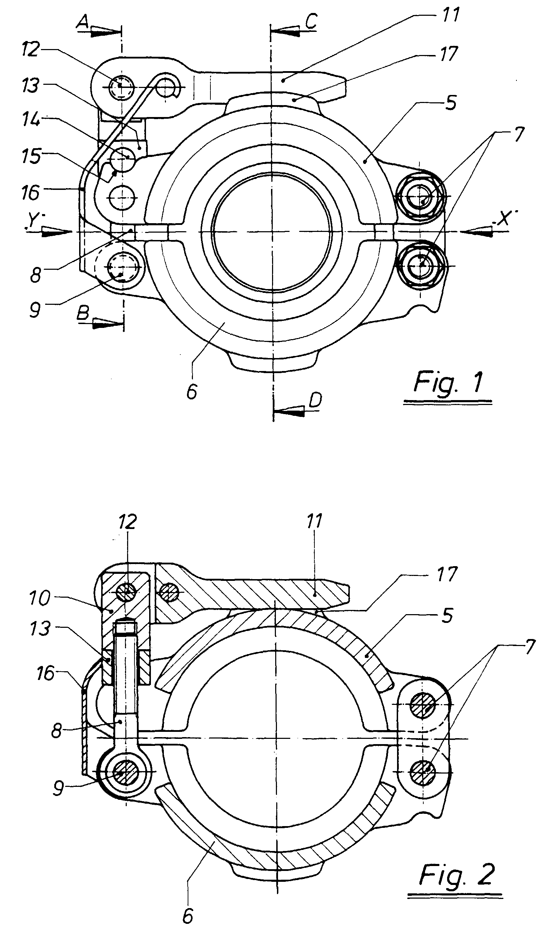

Die Schellenhälften 5, 6 sind an ihrem einen benachbarten Ende durch zwei Schraubenbolzen 7 gelenkig bzw. schwenkbar miteinander verbunden. Bei den Bolzen 7 kann es sich um lösbare Schraubenbolzen mit aufgesetzter gesicherter Schraubenmutter handeln, wie in Fig. 1 dargestellt ist. Statt zweier Bolzen kann auch nur einer vorgesehen sein.

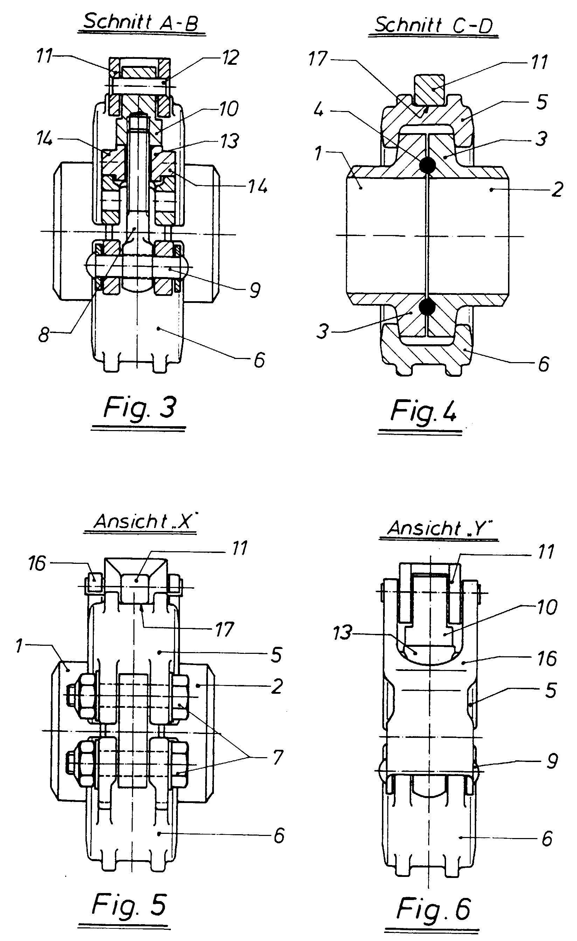

Am anderen diametral gegenüberliegenden Ende werden die im Querschnitt gemäß Fig. 4 annähernd C-förmigen Schellenhälften 5, 6 durch Betätigen eines Schnellverschlusses geöffnet bzw. geschlossen. Der Schnellverschluß umfaßt einen Schraubenbolzen 8, der durch einen Lagerbolzen 9 an dem anderen Ende der Schellenhälfte 6 um eine zur Achse der Kupplung parallele Achse schwenkbar gelagert ist. Auf das freie mit Gewinde versehene Ende des Schraubenbolzens 8 ist eine Schraubenmutter 10 aufgeschraubt. An dieser ist ein Hebel 11 mittels eines Lagerbolzens 12 angelenkt. Die Schraubenmutter 10 wirkt mit einem über den Gewindeschaft des Schraubenbolzens 8 geschobenen Gleitstück zusammen. Das Gleitstück 13 weist zwei in entgegengesetzte Richtungen sich erstreckende Achsbolzen 14 auf, die nach dem Zusammenklappen der Schellenhälften 5 um die Rohrflansche 3 in Vertiefungen 15 am anderen Ende der Schellenhälfte 5 einliegen.

Mittels einer an demselben Lagerbolzen 9 wie der Schraubenbolzen 8 angelenkten Bügelfeder 16 kann der Hebel 11, in einer Vertiefung 17 an der Schellenhälfte 5 liegend, in der Schließstellung gesichert werden.

Das Schließen der Rohrkupplung geschieht folgendermaßen:

Bei geöffnetem Schnellverschluß und auseinandergeklappten Schellenhälften 5, 6 wird die Rohrkupplung um die Flansche 3 herumgelegt, wobei die Schellenhälften 5, 6 um die Bolzen 7 zusammengeklappt werden. Anschließend wird der Schraubenbolzen in die in Fig. 1 dargestellte vertikale Position geschwenkt. Danach wird das Gleitstück 13 vom freien Ende des Schraubenbolzens 8 über diesen geschoben, bis die Achsbolzen 14 in den Vertiefungen 15 der Schellenhälfte 5 einliegen. Daraufhin wird die Schraubenmutter 10 mittels des an ihr angelenkten Hebels 11 auf den Schraubenbolzen 8 aufgeschraubt, bis sie in Kontakt mit dem Gleitstück 13 kommt. Durch Weiterdrehen des Hebels 11 wird über die Achsbolzen 14 des Gleitstücks 13 Druck auf das andere Ende der Schellenhälfte 5 ausgeübt. Die an dieser Seite gegenüberliegenden Enden der Schellenhälften 5, 6 werden dadurch gegeneinander gezogen. Nach Erreichen der Schließstellung wird der Hebel 11 in die Vertiefung 17 an der Schellenhälfte 5 eingelegt und durch das Einklinken der Bügelfeder 16 gegen Drehen oder Schwenken gesichert.

Anstelle der Bügelfeder 16 kann der Hebel 11 auch mittels eines Splintes an der Schellenhälfte 5 festgelegt werden.

## Patentansprüche

1. Rohrkupplung, bestehend aus zwei Schellenhälften (5, 6) mit C-förmigem Querschnitt, die an ihrem einen Ende um mindestens einen Bolzen (7) gegeneinander schwenkbar verbunden sind und aus einem an den diametral gegenüberliegenden anderen Enden der Schellenhälften angebrachten Schnellverschluß, der einen Schraubenbolzen (8) umfaßt, dessen eines Ende an einer der Schellenhälften angelenkt ist und auf dessen anderes Ende eine die Schellenhälften in die Schließstellung ziehende Schraubenmutter (10) aufgesetzt ist, wobei an der Schraubenmutter (10) ein in der Schließstellung arretierbarer Hebel (11) angelenkt ist,
**dadurch gekennzeichnet,** daß die Schraubenmutter (10) an einem über den Schraubenbolzen (8) geschobenen Gleitstück (13) anliegt, das mit gegenüberliegenden Achsbolzen (14) in entsprechend geformten Vertiefungen (15) in der einen Schellenhälfte (5) ruht, und daß der Hebel (11) mittels einer an der anderen Schellenhälfte (6) angelenkten Bügelfeder (16) in der Schließstellung arretiert ist.

2. Rohrkupplung nach Anspruch 1,
**dadurch gekennzeichnet,** daß der Hebel (11) in der Schließstellung, in einer auf der einen Schellenhälfte (5) gebildeten Vertiefung (17) ruhend, arretiert ist.

3. Rohrkupplung nach Anspruch 1 oder 2,
**dadurch gekennzeichnet,** daß die Bügelfeder (16) an demselben Lagerbolzen (9) angelenkt ist wie der Schraubenbolzen (8).

## Claims

1. Pipe coupling, consisting of two clamp halves (5, 6) with C-shaped cross section, which are pivoted together at one end by at least one bolt (7), and of a quick-acting lock secured to the diametrically opposed other ends of the clamp halves, which includes a screw bolt (8) whose one end is hinged to one of the clamp halves, and whose other end accommodates a screw nut (10) that draws the clamp halves into the closed position, wherein a lever (11) that can be locked in the closed position is hinged to the screw nut (10), characterized by the fact that the screw nut (10) abuts a sliding piece (13) pushed over the screw bolt (8), with the sliding piece resting with opposing axial bolts (14) in correspondingly shaped recesses (15) in the one clamp half (5), and that the lever (11) is locked in the closed position by means of a clamp-type spring (16) hinged to the other clamp half (6).

2. Pipe coupling according to claim 1, characterized by the fact that the lever (11) is locked in the closed position, resting in a recess (17) formed on the one clamp half (5).

3. Pipe coupling according to claim 1 or 2,
characterized by the fact that the clamp-type spring (16) is hinged to the same bearing bolt (9) as the screw bolt (8).

## Revendications

1. Raccord de tuyaux composé de deux demi-brides (5, 6) de section en C reliées pivotantes l'une contre l'autre à l'une de leurs extrémités autour d'au moins un boulon (7) et d'une fermeture rapide disposée sur les extrémités diamétralement opposées des demi-brides, laquelle comprend un boulon fileté (8) dont l'une des extrémités est articulée sur l'une des demi-brides et sur l'autre extrémité duquel est posé un écrou (10) serrant les demi-brides pour les amener en position fermée, un levier (11) pouvant être arrêté en position fermée étant articulé sur l'écrou (10),
caractérisé en ce que l'écrou (10) porte sur une coulisse (13) insérée au dessus du boulon fileté (8), laquelle repose avec des axes (14) opposés dans des évidements (15) aménagés à cet effet sur l'une des demi-brides (5) et en ce que le levier (11) est arrêté en position fermée au moyen d'un ressort à étrier (16) articulé sur l'autre demi-bride (6).

2. Raccord de tuyaux selon la revendication 1 caractérisé en ce que, reposant dans un évidement (17) aménagé sur la demi-bride (5), le levier est arrêté en position fermée.

3. Raccord de tuyaux selon la revendication 1 ou 2 caractérisé en ce que le ressort à étrier (16) est articulé sur le même boulon de palier (9) que le boulon fileté (8).
